# FASCICULE DE BREVET EUROPEEN

(11) **EP 0 458 690 B1**
(45) Date de publication et mention de la délivrance du brevet: **05.04.1995**
(21) Numéro de dépôt: 91401297.6
(22) Date de dépôt: 21.05.1991
(51) Int. Cl.: C03B 23/00, B29C 57/00, G02B 6/38

(54) **Procédé de réalisation d'un cône d'entrée sur un embout de raccordement pour fibres optiques et dispositif de mise en oeuvre**
Herstellungsverfahren von einem Eingangskonns an einem faseroptischen Steckerstift und Vorrichtung zu dessen Durchführung
Fabrication method of an entry cone on fibre optic ferrule and apparatus for carrying out this method

(30) Priorité: 22.05.1990 FR 9006366
(43) Date de publication de la demande: 27.11.1991
(73) Titulaire: FRANCE TELECOM, 75015 Paris (FR)
(72) Inventeur: Mehadji, Kada, F-22300 Lannion (FR); Mathern, André, F-22300 Lannion (FR); Le Penven, René, F-22300 Ploumilliau (FR)
(74) Mandataire: Martin, Jean-Jacques

(56) Documents cités:
- WO-A-87/01464
- FR-A- 2 117 961
- US-A- 3 944 328
- US-A- 4 135 902
- PATENT ABSTRACTS OF JAPAN, vol. 7, no. 78 (P-188)[1223], 31 mars 1983;& JP-A-58 9116 (HITACHI KASEI KOGYO K.K.) 19-01-1983

## Description

La présente invention concerne un procédé de réalisation d'un cône d'entrée à une des extrémités d'un embout de raccordement pour fibres optiques, ledit embout ayant la forme d'une baguette cylindrique de diamètre extérieur D, et comportant un capillaire intérieur de diamètre dᵢ.

L'invention trouve une application particulièrement avantageuse dans le domaine des techniques de raccordement pour fibres optiques multimodes et monomodes.

L'utilisation d'embouts de raccordement se généralise de plus en plus dans les connecteurs pour fibres optiques. Ce type de dispositif simplifie en effet considérablement les problèmes de montage et de positionnement de la fibre dans l'organe de connexion. Aussi, ce produit, même s'il reste d'un coût relativement élevé, donne aujourd'hui toute satisfaction à l'utilisateur et il est à prévoir que son développement dans l'avenir ne cesse d'augmenter.

Actuellement, la quasi-totalité des embouts de raccordement pour fibres optiques est fabriquée avec de la céramique, la zircone en particulier. Cependant, la demande de brevet europeen 0 441 696, publiée le 14.08.91 et de ce fait appartenant à l'état de la technique risé à l'article 54, paragraphe 3, enseigne un procédé de réalisation par fibrage d'embouts de raccordement en silice, qui permet d'aboutir directement à une très haute précision géométrique (diamètre intérieur, diamètre extérieur, concentricité), à faible coût, avec une excellente tenue mécanique et des états de surface nettement supérieurs à ceux obtenue par extrusion et usinage des embouts céramiques.

Toutefois, la réalisation du cône d'entrée de l'embout, destiné à faciliter l'insertion de la fibre optique dans le capillaire, exige un usinage lent, très délicat et onéreux qui impose des contrôles sévères et coûteux.

Aussi, le problème technique à résoudre par l'objet de la présente invention est de proposer un procédé de réalisation d'un cône d'entrée à une des extrémités d'un embout de raccordement pour fibres optiques, ledit embout ayant la forme d'une baguette cylindrique de diamètre extérieur D, et comportant un capillaire intérieur de diamètre dᵢ, procédé qui permettrait de réaliser ledit cône d'entrée avec un faible coût, tout en répondant aux exigences de précision imposées par la technologie de connexion "fibres optiques".

Une solution au problème technique posé est, selon la présente invention, remarquable en ce que ledit procédé consiste à disposer sur ladite extrémité de l'embout de raccordement une pièce de guidage constituée par un corps cylindrique à l'intérieur duquel sont aménagés, d'une part, un alésage cylindrique de diamètre sensiblement égal au diamètre D de l'embout, limité, à l'intérieur dudit corps cylindrique, par une paroi formant butée vis-à-vis de l'extrémité dudit embout lorsque celle-ci est introduite par emmanchement à l'intérieur dudit alésage, et, d'autre part, un trou de guidage présentant au moins une partie tronconique s'ouvrant vers l'extérieur du corps cylindrique avec un diamètre supérieur au diamètre dᵢ, et débouchant dans l'alésage cylindrique, au niveau dudit capillaire, avec un diamètre sensiblement égal au diamètre dᵢ du capillaire.

Ce procédé convient à tout type d'embout de raccordement quel que soit le matériau dont il est constitué : silice, céramique, ...

Dans un mode de mise en oeuvre avantageux du procédé selon l'invention, ladite pièce de guidage est réalisée par moulage autour d'un noyau muni d'un trou représentant ladite extrémité de l'embout de raccordement muni de son capillaire, une aiguille calibrée présentant au moins une forme tronconique étant introduite dans le trou représentant le capillaire et maintenue en butée contre le noyau au débouché dudit trou.
La figure 1 montre en coupe un embout de raccordement dépourvu de cône d'entrée,
la figure 2 est une vue en coupe de l'embout de raccordement de la figure 1 muni d'une pièce de guidage présentant un cône d'entrée,
la figure 3 est une coupe d'une vue partielle d'un moule pour réaliser la pièce de guidage de la figure 2,

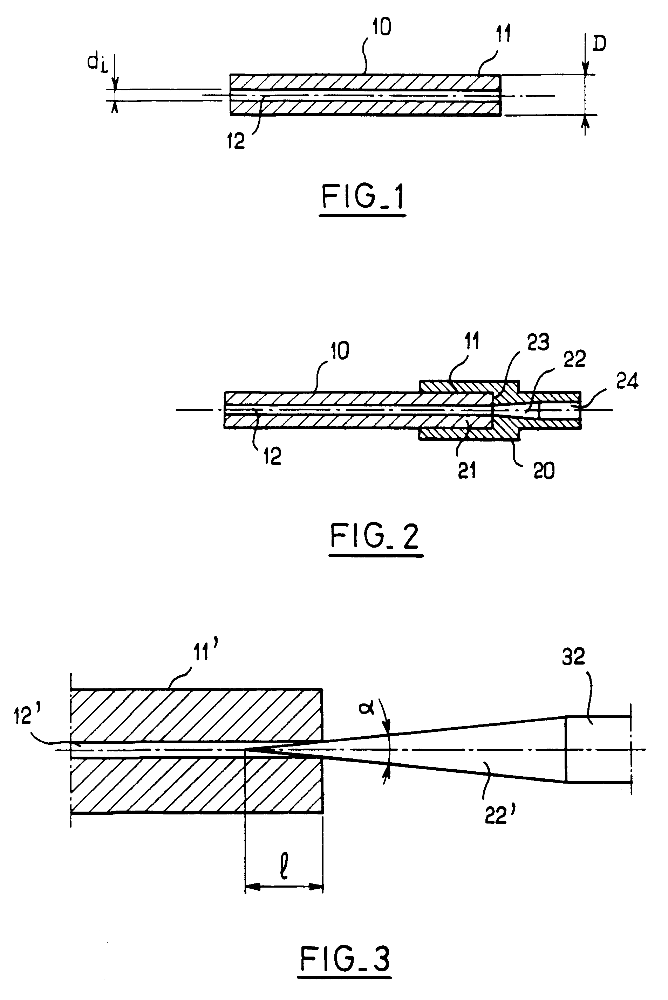

La figure 1 montre en coupe un embout 10 de raccordement pour fibres optiques réalisé, par exemple, par la technique de fibrage d'un tube de silice décrit dans la demande de brevet europeen 0 441 696 précitée. Le diamètre extérieur D de l'embout 10, de l'ordre de 2 mm, et le diamètre intérieur dᵢ du capillaire 12, environ 126 »m, sont parfaitement définis et tolérancés à ±0,5 »m. Leur concentricité est maintenue dans un intervalle de 0 à 0,5 »m.

Le capillaire 12 est destiné à recevoir une fibre optique (non représentée) dont le diamètre est légèrement inférieur à dᵢ. Quand la fibre est collée, un autocentrage est obtenu entre le coeur de la fibre et le capillaire et, par conséquent, entre le coeur et le diamètre extérieur D de l'embout 10 de raccordement. L'intérêt de l'embout de raccordement est de réaliser aussi simplement que possible ce centrage de la fibre dans le capillaire, d'où le développement actuel de ce genre de dispositifs.

L'opération de mise en place de la fibre dans le capillaire est facilitée lorsque l'on munit une des extrémités 11 de l'embout 10 d'un cône 22 d'entrée destiné à recevoir la fibre et la guider vers le capillaire 12. Dans ce but, comme le montre la figure 2, l'extrémité 11 de l'embout 10 est munie d'une pièce 20 de guidage constituée par un corps cylindrique à l'intérieur duquel est aménagé un alésage cylindrique 21 de diamètre sensiblement égal au diamètre extérieur D de l'embout 10 de raccordement. L'alésage cylindrique 21 est limité, à l'intérieur dudit corps cylindrique 20, par une paroi 23 formant butée vis-à-vis de l'extrémité 11 de l'embout 10 lorsque celle-ci est introduite par emmanchement à l'intérieur dudit alésage 21. D'autre part, le corps cylindrique 20 comporte également un trou 24 de guidage présentant au moins une partie tronconique 23 s'ouvrant vers l'extérieur de la pièce 20 de guidage avec un diamètre supérieur au diamètre dᵢ, et débouchant dans l'alésage cylindrique 21, au niveau du capillaire 12, avec un diamètre sensiblement égal au diamètre du capillaire.

La figure 3 montre, partiellement, un moule permettant de réaliser la pièce 20 de guidage de la figure 2 par moulage d'un matériau plastique tel qu'une polyamide ou du polyphénylènesulfure. Ce moule comprend essentiellement un noyau 11' muni d'un trou 12' représentant l'extrémité 11 de l'embout muni de son capillaire 12, ainsi qu'une aiguille 32 taillée en pointe présentant au moins une forme tronconique 22'. Sur la figure 3, l'aiguille 32 est dans sa position de travail, c'est-à-dire maintenue en butée contre le noyau 11' au débouché du trou 12', par un mécanisme approprié exerçant un effort calibré, la pointe de l'aiguille 32 étant introduite dans ledit trou 12'. L'angle α au sommet de l'aiguille est de 12 degrés par exemple. Ceci permet une pénétration ℓ de la pointe de l'aiguille de l'ordre de 0,6 mm dans le trou 12'.

Le noyau 11' utilisé dans le moule a les mêmes caractéristiques dimensionnelles que l'embout 10 de raccordement, mais ses cotes pourraient être modifiées si cela s'avérait nécessaire. Ces modifications concerneraient éventuellement les différents retraits de la pièce moulée.

La pièce 20 de guidage est montée serrée par emmanchement sur l'embout 10. Le serrage de l'emmanchement est en général suffisant, mais, en cas de besoin, un collage pourrait être ajouté.

La forme extérieure n'est pas davantage définie. Il appartient à l'utilisateur de réaliser les formes recherchées en fonction de l'environnement de l'embout.

## Revendications

1. Procédé de réalisation d'un cône (22) d'entrée à une (11) des extramités d'un embout (10) de raccordement pour fibres optiques, ledit embout (10) ayant la forme d'une baguette cylindrique de diamètre extérieur D, et comportant un capillaire intérieur (12) de diamètre dᵢ, caractérisé en ce qu'il consiste à munir ladite (11) extrémité de l'embout (10) de raccordement d'une pièce (20) de guidage constituée par un corps cylindrique à l'intérieur duquel sont aménagés, d'une part, un alésage cylindrique (21) de diamètre sensiblement égal au diamètre D de l'embout (10), limité, à l'intérieur dudit corps cylindrique (20), par une paroi (23) formant butée vis-à-vis de l'extrémité (11) dudit embout (10) lorsque celle-ci est introduite par emmanchement à l'intérieur dudit alésage (21), et, d'autre part, un trou (24) de guidage présentant au moins une partie tronconique (22) s'ouvrant vers l'extérieur du corps cylindrique (20) avec un diamètre supérieur au diamètre dᵢ, et débouchant dans l'alésage cylindrique (21), au niveau dudit capillaire (12), avec un diamètre sensiblement égal au diamètre dᵢ du capillaire.

2. Procédé selon la revendication 1, caractérisé en ce que ladite pièce (20) de guidage est réalisée par moulage autour d'un noyau (11') muni d'un trou (12'), représentant ladite extrémité (11) de l'embout (10) de raccordement muni de son capillaire (12), une aiguille (32) calibrée présentant au moins une forme tronconique (22') étant introduite dans le trou (12') représentant le capillaire (12) et maintenue en butée contre le noyau (11'') au débouché dudit trou (12').

## Claims

1. A method of making an inlet cone (22) at one of the ends (11) of a connection endpiece (10) for optical fibers, said endpiece (10) being in the form of a cylindrical rod of outside diameter D and including an internal capillary (12) of diameter dᵢ, the method being characterized in that it consists in providing said end (11) of the connection endpiece (10) with a guide part (20) constituted by a cylindrical body having formed therein: firstly a cylindrical bore (21) of diameter substantially equal to the diameter D of the endpiece (10), which bore is delimited inside said cylindrical body (20) by a wall (23) constituting an abutment for the end (11) of said endpiece (10) when the endpiece is inserted into said bore (21); and secondly a guide hole (24) having at least one tapering portion (22) opening to the outside of the cylindrical body (20) with a diameter that is greater than the diameter dᵢ, and opening into the cylindrical bore (21) at said capillary (12) with a diameter which is substantially equal to the diameter dᵢ of the capillary.

2. A method according to claim 1, characterized in that said guide part (20) is made by being molded around a core (11') provided with a hole (12') and representing said end (11) of the connection endpiece (10) including its capillary (12), together with a calibrated needle (32) having at least a tapering portion (22') inserted into the hole (12') representing the capillary (12) and being kept in abutment against the core (11') at the open end of said hole (12').

## Patentansprüche

1. Verfahren zum Realisieren eines Eingangskonus (22) an einem Ende (11) eines Verbindungsteils (10) für optische Fasern, wobei das Verbindungsteil (10) die Form eines zylindrischen Stabs mit einem Außendurchmesser D aufweist und eine innere Kapillare (12) mit einem Durchmesser dᵢ umfaßt, dadurch gekennzeichnet, daß es darin besteht, das genannte Ende (11) des Verbindungsteils (10) mit einem Führungsteil (20) zu versehen, das aus einem zylindrischen Körper aufgebaut ist, in dessen Innerem einerseits eine zylindrische Bohrung (21) mit einem Durchmesser im wesentlichen gleich dem Durchmesser D des Verbindungsteils (10), die im Inneren des zylindrischen Körpers (20) durch eine Wand (23) begrenzt wird, die einen Anschlag für das Ende (11) des Verbindungsteils (10) bildet, wenn dieses durch Einstecken in das Innere der Bohrung (21) eingeführt wird, und andererseits ein Führungsloch (24) vorgesehen ist, das mindestens einen stumpfkegeligen Abschnitt (22) aufweist, der sich zur Außenseite des zylindrischen Körpers (20) hin mit einem Durchmesser öffnet, der größer als der Durchmesser dᵢ ist, und der in die zylindrische Bohrung (21) auf der Höhe der Kapillare (12) mit einem Durchmessser mündet, der im wesentlichen gleich dem Durchmesser dᵢ der Kapillare ist.

2. Verfahren nach Anspruch 1, dadurch gekennzeichnet, daß das Führungsteil (20) durch Formen um einen mit einem Loch (12') versehenen Kern (11') gebildet wird, welcher das genannte Ende (11) des mit seiner Kapillare (12) versehenen Verbindungsteils (10) darstellt, wobei eine kalibrierte Nadel (32), welche mindestens eine stumpfkegelige Form (22') aufweist, in das Loch (12'), das die Kapillare (12) darstellt, eingeführt wird und so gehalten wird, daß sie an der Öffnung des Lochs (12') an den Kern (11'') anschlägt.
